# EUROPÄISCHE PATENTSCHRIFT

(11) **EP 2 707 576 B1**
(45) Veröffentlichungstag und Bekanntmachung des Hinweises auf die Patenterteilung: **04.03.2015**
(21) Anmeldenummer: 12753050.9
(22) Anmeldetag: 09.05.2012
(51) Int. Cl.: G05B 19/401, F01D 5/00, F01D 5/14, G01B 21/20

(54) **PRÜFUNG EINER SCHAUFELKONTUR EINER TURBOMASCHINE**
CHECKING OF A TURBOMACHINE BLADE CONTOUR
VÉRIFICATION DU CONTOUR D'UNE AUBE DE TURBOMACHINE

(30) Priorität: 10.05.2011 DE 102011101097
(43) Veröffentlichungstag der Anmeldung: 19.03.2014
(73) Patentinhaber: MTU Aero Engines GmbH, 80995 München (DE)
(72) Erfinder: ZIMMERMANN, Hans, 84036 Landshut (DE)
(86) Internationale Anmeldenummer: PCT/DE2012/000476
(87) Internationale Veröffentlichungsnummer: WO 2012/152255

(56) Entgegenhaltungen:
- EP-A2- 1 615 153
- EP-A2- 1 777 495
- WO-A1-2008/001043
- WO-A1-2010/099890
- DE-A1- 4 223 483
- GB-A- 2 350 809

## Beschreibung

Die vorliegende Erfindung betrifft ein Verfahren zur Prüfung einer Schaufelkontur einer Turbomaschine, insbesondere einer Gasturbine, sowie ein Schaüfelkonturprüfmittel und ein Computerprogrammprodukt zur Durchführung eines solchen Verfahrens.

Insbesondere Lauf- und Leitschaufeln von Verdichter- und Turbinenstufen von Flugtriebwerken müssen bei Herstellung und/oder Wartung überprüft werden. Dabei wird unter anderem die Profilform auf Saug- und/oder Druckseite der Schaufeln geprüft. Insbesondere wird an deren An- und/oder Abströmkanten geprüft, ob die Ist-Radien in einem vorgegebenen Toleranzbereich liegen.

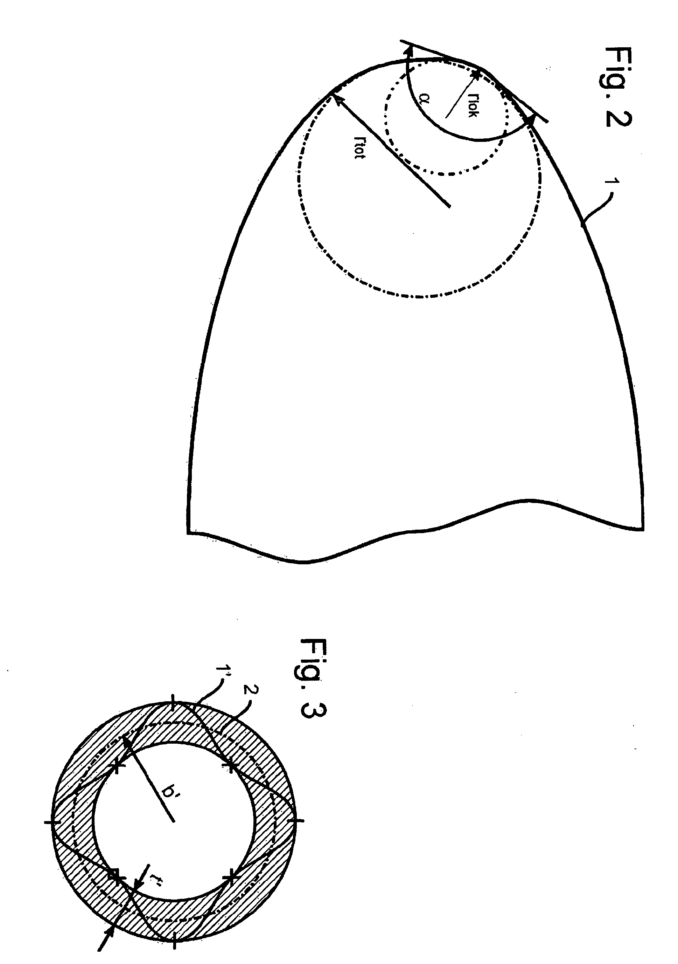

Dies wird nach interner Praxis bisher durchgeführt, indem eine Ist-Kontur der jeweiligen Schaufel erfasst und für diese automatisch ein minimaler einbeschriebener Krümmungskreis ermittelt und dessen Radius mit einem Soll-Kantenradius verglichen wird. Fig. 2 zeigt hierzu exemplarisch und schematisiert einen Teil eines Schaufelquerschnitts mit einer Ist-Kontur 1 und einem Soll-Kantenradius rₜₒₜ. Aufgrund einer kleinen, lokalen Abweichung der Ist- von einer Soll-Kontur wird dort der einbeschriebene Krümmungskreis mit minimalem Krümmungsradius rₗₒₖ ermittelt und als Kantenradius mit dem Soll-Kantenradius rₜₒₜ verglichen. Dies führt, wie an dem Beispiel erkennbar, dazu, dass das Ist-Profil 1 aufgrund der großen Abweichung zwischen minimalem Krümmungsradius rₗₒₖ und Soll-Kantenradius rₜₒₜ in der automatischen Beurteilung als fehlerhaft eingestuft wird, was eine zusätzliche manuelle Überprüfung durch Fachpersonal erfordert. Da im Beispiel die Ist-Kontur 1 mit einer Soll-Kontur, die im Bereich der Anströmkante durch den Soll-Kantenradius rₜₒₜ beschrieben wird, ausreichend übereinstimmt, wird die Schaufel dort akzeptiert. Dementsprechend führte die bisher bekannte automatische Überprüfung durch Ermittlung von und Vergleich mit minimalen einbeschriebenen Krümmungskreisen zu fehlerhaften Beanstandungen und damit erheblichem Mehraufwand durch die manuelle Überprüfung durch Fachpersonal.

Dokument DE 42 23 483 A1 offenbart ein Verfahren zur Bestimmung der Form- und Lageabweichungen von Fertigungsteilen, vorzugsweise Triebwerksschaufeln, wobei ein 3D-Flächenmodell einer nominalen Schaufel in einem CAD-System vorhanden wird, Informationen über die Lage und Form einer zu messenden Schaufel durch eine CCD-Messkamera erhalten werden und eine Best-Fit-Einpassung der zu messenden Schaufel bezüglich dieses 3D-Flächenmodells vorgenommen wird, um die Verformung der Schaufel zu bestimmen.

Aufgabe der vorliegenden Erfindung ist es, die Prüfung von Schaufelkonturen von Turbomaschinen zu verbessern.

Diese Aufgabe wird durch ein Verfahren nach Anspruch 1 gelöst. Ansprüche 12, 13 stellen ein Schaufelkonturprüfmittel bzw. ein Computerprogrammprodukt, insbesondere einen Datenträger bzw. maschinenlesbaren Speicher, mit einem Computerprogramm zur Durchführung eines solchen Verfahrens unter Schutz. Dabei kann ein Mittel im Sinne der vorliegenden Erfindung hard- und/oder softwaretechnisch ausgebildet sein und entsprechend insbesondere einen Computer bzw. eine, vorzugsweise integrierte und/oder programmierbare, Schaltung, und/oder ein Programm oder Programmmodul umfassen, welches ein erfindungsgemäßes Verfahren ausführt, wenn es in einem Computer abläuft.

Zur Prüfung einer Kontur einer oder mehrerer Schaufeln einer Turbomaschine, insbesondere Leit- und/oder Laufschaufeln einer oder mehrerer Verdichter- und/oder Turbinenstufen einer Gasturbine, vorzugsweise eines Flugtriebwerkes, wird zunächst eine Ist-Kontur einer zu prüfenden Schaufel erfasst. Dies kann insbesondere berührend, vorzugsweise durch eine antastende Messmaschine, oder berührungslos, vorzugsweise durch Bestrahlung mit elektromagnetischer Strahlung und Erfassung von reflektierter und/oder gestreuter Strahlung, induktiv und/oder magnetisch erfolgen. In einer bevorzugten Ausführung wird die Ist-Kontur diskret erfasst, indem die Lage einer endlichen bzw. begrenzten Anzahl von Punkten auf der Kontur relativ zueinander und/oder zu einem Bezugssystem erfasst wird.

Erfindungsgemäß wird eine Soll-Kontur der Schaufel skaliert und die Ist-Kontur mit dieser skalierten Soll-Kontur verglichen. Es wird also nicht mehr wie bisher direkt mit einer nominalen Soll-Kontur, wie sie etwa aus CAD-Daten vorgegeben wird, verglichen, sondern diese zunächst skaliert und so an die Ist-Kontur angepasst. Der Vergleich der Ist-Kontur mit dieser angepassten Soll-Kontur ermöglicht eine bessere Beurteilung der Ist-Kontur.

Unter einer Skalierung wird vorliegend insbesondere eine gestaltinvariante bzw. geometrisch ähnliche Veränderung der Soll-Kontur durch, vorzugsweise proportionale bzw. maßstäbliche, Vergrößerung bzw. Verkleinerung und/oder Verschiebung der Kontur als Ganzes verstanden, wenngleich eine Skalierung im Sinne der vorliegenden Erfindung allgemein auch andere Veränderungen der Soll-Kontur, insbesondere unter lokaler Änderung ihrer Gestalt, umfassen kann. Unter einer Gestalt wird vorliegend insbesondere eine Definition der Kontur durch eine begrenzte Anzahl von Parametern verstanden, etwa die (lokale) Definition durch Kreise, Krümmungsmittelpunkte und -radien, Verbindungsgeraden, Kegelschnitte oder dergleichen. So kann beispielsweise eine elliptische Gestalt durch ihre beiden Hauptachsen bzw. die Radien und Mittelpunkte der Hauptkreise definiert werden. Allgemein kann die Soll-Kontur daher insbesondere durch eine skalierbare Gestalt vorgegebenen werden. Eine gestaltinvariante Skalierung behält entsprechend die qualitative bzw. dimensionsfreie Definition der Gestalt, beispielsweise als Kreis, Ellipse oder dergleichen bei. Insbesondere kann die Soll-Kontur daher durch ein Formgesetz vorgegeben werden, etwa "Alle Punkte weisen denselben (Kreis)/einen linear anwachsenden (Spirale) Abstand zu einem Punkt auf' oder "Kombination zweier Kreise und eine diese tangential verbindende Gerade", wobei diese Gestalt durch die wenigen Parameter "Radius des 1., 2. Kreises" und "Lage des Mittelpunktes des einen relativ zum anderen Kreis" quantifiziert werden kann. In einer bevorzugten Weiterbildung ist die Gestalt asymmetrisch, also insbesondere kein Kreis.

Entsprechend wird allgemein die Soll-Kontur in einer bevorzugten Ausführung durch Variation genau eines oder mehrerer Parameter skaliert. Beispielsweise kann ein Kreis gestaltinvariant durch Vergrößern bzw. Verkleinern seines Radius, d.h. seiner Krümmung, und/oder durch Verschiebung seines Mittelpunktes im Sinne der vorliegenden Erfindung skaliert werden. In einer bevorzugten Weiterbildung wird ein Kantendickenmaß des Schaufelprofils variiert. Hierunter wird vorliegend die Dicke der Schaufel in einem vorgegebenen Abstand von einem Nasenpunkt, d.h. einem äußersten Profilpunkt, verstanden.

In einer bevorzugten Ausführung wird die Soll-Kontur auf Basis wenigstens einer Extremalbedingung bezüglich der Ist-Kontur skaliert. Insbesondere kann die Soll-Kontur derart skaliert werden, dass ein Abstand zur Ist-Kontur minimal wird. Der Abstand kann dabei insbesondere durch die Summe oder den größten Wert der Beträge oder Quadrate der Abstände zwischen Punkten der Ist-Kontur und diesen zugeordneten Punkten der Soll-Kontur definiert sein, wobei einem Punkt der Ist-Kontur vorzugsweise der nächstgelegene Punkt der Soll-Kontur zugeordnet wird. Die Soll-Kontur wird sozusagen bestmöglich eingepasst. Allgemein kann hierzu die Extremalbedingung eine Metrik der Abstände zwischen Punkten der Ist- und Soll-Kontur umfassen, etwa die vorstehend erläuterte Summe der Abstandsquadrate.

Zur Überprüfung der Kontur wird in einer bevorzugten Ausführung ein, insbesondere maximaler, Abstand der Ist-Kontur von der skalierten Soll-Kontur ermittelt. Hierzu kann ein Abstand zwischen Ist- und skalierter Soll-Kontur an einem oder mehreren Punkten der Ist- oder Soll-Kontur ermittelt werden. Gleichermaßen ist es möglich, ein Toleranzband um die skalierte Soll-Kontur vorzugeben und zu ermitteln, ob die Ist-Kontur innerhalb dieses Toleranzbandes liegt, d.h. der Abstand zwischen Ist- und Soll-Kontur stets kleiner oder gleich der Breite des Toleranzbandes ist. Auch eine solche Ermittlung, ob ein Abstand stets kleiner als ein vorgegebener Grenzwert ist, wird vorliegend als Ermittlung eines Abstandes der Ist-Kontur von der skalierten Soll-Kontur bezeichnet. In einer bevorzugten Weiterbildung wird die Ist-Kontur mit der skalierten Soll -Kontur über einer vorgegebenen Bewertungslänge, insbesondere in einem vorgegebenen Bereich von einem Nasenpunkt der Schaufel aus, verglichen.

Wenn erfindungsgemäß die Soll-Kontur skaliert und die Ist-Kontur mit der skalierten Soll-Kontur verglichen wird, besteht grundsätzlich die Gefahr, dass die Soll-Kontur zu stark skaliert wird. In diesem Falle würde eine Ist-Kontur, die von der - unskalierten - Soll-Kontur zu' stark, jedoch überall gleich, abweicht, fehlerhafterweise als korrekt beurteilt. Daher wird in einer bevorzugten Weiterbildung eine extremale Skalierung der Soll-Kontur vorgegeben, d.h. eine zulässige Grenze für die Skalierung. Erfolgt die Skalierung durch Variation eines oder mehrerer Parameter, kann beispielsweise eine Unter- und/oder Obergrenze für solche Parameter vorgegeben werden.

Durch einen erfindungsgemäßen Vergleich der Ist- mit der skalierten Soll-Kontur kann insbesondere eine Gestaltabweichung der Ist-Kontur erkannt werden. Dies ist bei der Prüfung von Schaufeln von Turbomaschinen zweckmäßig, da es zur Beurteilung von deren, insbesondere aerodynamischer, Qualität weniger auf deren absoluten Dimensionen, sondern auf deren Gestalt ankommt, beispielsweise eine kreisförmige An- oder Abströmkante, eine elliptische, paraboloide oder tropfenförmige Gestalt eines Ein- oder Austrittsbereichs oder dergleichen. Gleichwohl können lokale Extrema, insbesondere Spitzen oder Stellen mit sehr großen lokalen Krümmungen, insbesondere unter strukturmechanischen oder herstellungstechnischen Gesichtspunkten, nachteilig sein. Daher werden in einer bevorzugten Ausführung zusätzlich ein oder mehrere lokale Extrema, insbesondere Krümmungsextrema, vorzugsweise -maxima, der Ist-Kontur ermittelt. Unter einem Krümmungsextremum wird vorliegend verallgemeinernd auch eine Spitze, d.h. ein Bereich verstanden, bei dem links- und rechtsseitiger Tangentengrenzwert einen Winkel ungleich Null miteinander bilden. Insbesondere kann eine minimale Krümmung der Ist-Kontur ermittelt und mit einer zulässigen Krümmung verglichen werden, um solche lokalen Extrema zu ermitteln und zu bewerten.

Vorzugsweise werden ein oder mehrere Schritte eines erfindungsgemäßen Verfahrens jeweils ganz oder teilweise automatisiert durchgeführt. Insbesondere kann ein Erfassungsmittel eine Ist-, Kontur einer Schaufel wenigstens teilautomatisiert erfassen, wobei in einer bevorzugten Weiterbildung eine gemessene Ist-Kontur durch Filterung, Glättung oder dergleichen bearbeitet werden kann. Ein Vorgabemittel kann eine Soll-Kontur der Schaufel wenigstens teilautomatisiert vorgeben, insbesondere auf Basis von CAD-Daten der Schaufel. Zusätzlich oder alternativ kann ein Skalierungsmittel die Soll-Kontur wenigstens teilautomatisiert skalieren, etwa durch Ermittlung des Abstandes zur Ist-Kontur und Variation eines oder mehrerer Parameter der Gestalt der Soll-Kontur derart, dass dieser Abstand minimal wird oder einen vorgegebenen Grenzwert unterschreitet. Ein Vergleichsmittel kann wenigstens teilautomatisiert die Ist-Kontur mit der skalierten Soll-Kontur vergleichen, insbesondere, indem ermittelt wird, ob die Ist-Kontur innerhalb eines Toleranzbandes mit vorgegebener Breite um die skalierte Soll-Kontur liegt.

Vorliegend wird zur kompakteren Darstellung sowohl ein Radius als auch dessen Kehrwert verallgemeinernd als Krümmung bezeichnet.

Weitere Merkmale und Vorteile ergeben sich aus den Unteransprüchen und den Ausführungsbeispielen. Hierzu zeigt, teilweise schematisiert:
- Fig. 1:: einen Teil einer Schaufelkontur, die nach einer Ausführung der vorliegenden Erfindung geprüft wird;
- Fig. 2:: einen minimalen einbeschriebenen Krümmungskreis und einen Soll-Kantenradius der Schaufelkontur der Fig. 1; und
- Fig. 3:: eine vereinfachte Ist- und eine erfindungsgemäß skalierte Soll-Kontur.

Ein erfindungsgemäßes Verfahren kann zunächst an Fig. 3 verdeutlicht werden. In dieser sind acht Messpunkte, die eine Messmaschine von einer Ist-Kontur erfasst hat, durch Kreuze angedeutet. Die solcherart erfasste Ist-Kontur 1' verläuft entsprechend durch diese Messpunkte.

Die Soll-Kontur ist durch ihre Gestalt in Form eines Kreises vorgegeben. Sie kann gestaltinvariant, d.h. ohne qualitative Änderung der Gestalt, skaliert werden, indem der Radius b' des Kreises und die Lage seines Mittelpunktes variiert werden.

Die Soll-Kontur der Schaufel wird auf Basis einer Extremalbedingung bezüglich der Ist-Kontur 1' skaliert, indem für jeden der Messpunkte der Ist-Kontur der Abstand zu dem ihm nächstgelegenen Punkt der Soll-Kontur bestimmt, von diesem das Quadrat gebildet, hierüber summiert wird, und Radius und Mittelpunkt solange variiert werden, bis diese Summe der Quadrate der Abstände minimal wird oder wenigstens einen vorgegebenen Grenzwert unterschreitet. In Fig. 3 ist die entsprechend skalierte Soll-Kontur 2 eingezeichnet.

Nun wird die Ist-Kontur 1' mit dieser skalierten Soll-Kontur 2 verglichen. Hierzu wird ein Toleranzband gleichbleibender Dicke t' um die skalierte Soll-Kontur 2 gelegt, welches in Fig. 3 schraffiert eingezeichnet ist, und geprüft, ob die Ist-Kontur 1' vollständig innerhalb dieses Toleranzbandes liegt. Ist dies der Fall, weicht die Gestalt der Ist-Kontur 1' nur in zulässigem Maß von der vorgegebenen, im Ausführungsbeispiel kreisförmigen Gestalt ab. Man erkennt, dass das erfindungsgemäße Verfahren zur Beurteilung einer aus aerodynamischer Sicht wichtigeren Gestaltabweichung gut geeignet ist. Insbesondere können zu deren Beurteilung aufgrund der erfindungsgemäßen Einpassung der Soll-Kontur engere Toleranzfelder als bisher vorgegeben werden.

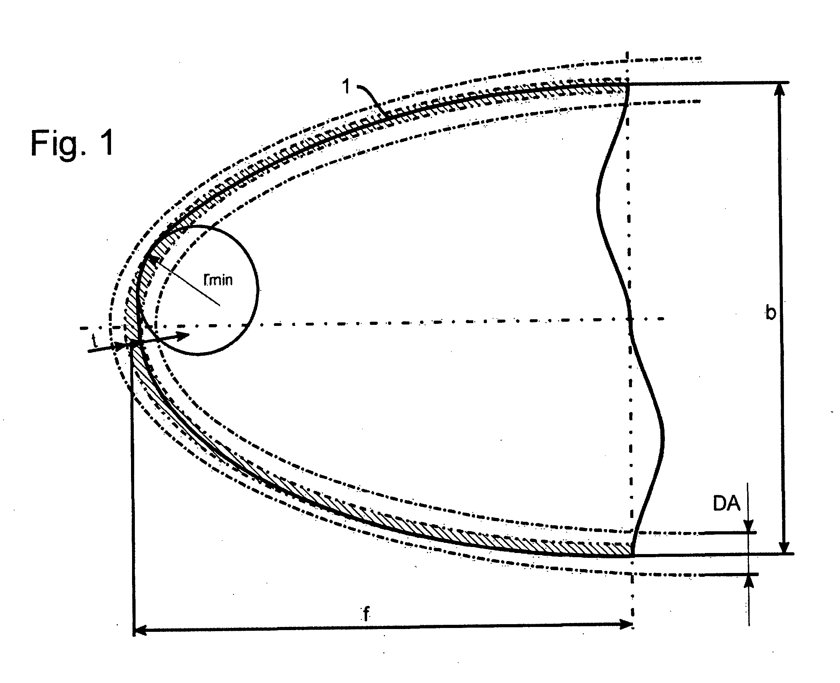

Fig. 1 zeigt einen Teil einer Schaufelkontur 1, die nach einer Ausführung der vorliegenden Erfindung geprüft wird. Die Schaufelkontur soll im Bereich der Anströmkante (links in Fig. 1) eine elliptische Gestalt aufweisen, insbesondere im Bereich des Nasenpunktes die Gestalt des kleineren Hauptkreises der Ellipse mit dem Kantenradius rₜₒₜ (vgl. Fig. 2).

Bisher wird hierzu nur geprüft, ob die Ist-Kontur 1 innerhalb eines relativ breiten Toleranzbandes DA um eine nominale Soll-Kontur mit entsprechender elliptischer Gestalt liegt. Erfindungsgemäß wird nun die Soll-Kontur mit der elliptischen Gestalt, wie vorstehend mit Bezug auf Fig. 3 exemplarisch erläutert, zunächst skaliert, bis ihr Abstand, definiert durch die Summe der Quadrate der Abstände von Mess- zu nächstgelegenen Soll-Konturpunkten, zur Ist-Kontur 1 minimal wird. Hierzu können beispielsweise Lage und/oder Größe der Hauptachsen der Ellipse variiert werden. In der gezeigten bevorzugten Ausführung wird das Kantendickenmaß b variiert, d.h. die Dicke des Schaufelquerschnitts im Abstand f vom Nasenpunkt. Anschließend wird innerhalb der Bewertungslänge f ein Toleranzband t um die solcherart skalierte Soll-Kontur gelegt. Zur besseren Übersichtlichkeit ist in Fig. 1 nur die Ist-Kontur 1 dick ausgezogen und das Toleranzband t schraffiert eingezeichnet, die skalierte Soll-Kontur jedoch weggelassen. Man erkennt, dass die Ist-Kontur gegen die eingepasste Soll-Kontur deutlich genauer auf ihre Gestaltabweichung geprüft werden kann, indem sie mit dem gegenüber DA deutlich kleineren Toleranzband t verglichen wird. Die Überprüfung bzw. der Vergleich erfolgt innerhalb der Bewertungslänge f, d.h. vom Nasenpunkt bis zum Querschnitt mit der Dicke b.

Neben der aus aerodynamischer Sicht wichtigen Gestaltabweichung soll auch die aus strukturmechanischen Gesichtspunkten wichtige Größe von lokalen Spitzen überprüft werden.

Hierzu wird innerhalb der Bewertungslänge f der minimale einbeschriebene Kreis ermittelt, dessen Krümmung bzw. Radius rₗₒₖ lokal mit der lokalen Krümmung der Ist-Kontur 1 übereinstimmt. Dieser Radius rₗₒₖ wird mit einem zulässigen minimalen Radius verglichen und so die Schaufel auf unzulässig spitze lokale Extrema geprüft. Anstelle des Radius rₗₒₖ kann beispielsweise auch der Winkel α ermittelt und mit einem Grenzwert verglichen werden, den die linksseitige und rechtsseitige Tangente an ein lokales Extremum der Ist-Kontur bilden, wie dies in Fig. 2 exemplarisch eingezeichnet ist.

## Patentansprüche

1. Verfahren zur Prüfung einer Schaufelkontur einer Turbomaschine, insbesondere einer Gasturbine, wobei eine Ist-Kontur (1; 1') einer Schaufel erfasst wird,
**dadurch gekennzeichnet, dass**
a) eine Soll-Kontur der Schaufel skaliert wird, wobei unter einer Skalierung eine gestaltinvariante oder geometrisch ähnliche Veränderung der Soll-Kontur durch Vergrößerung oder Verkleinerung der Kontur als Ganzes verstanden wird, und die Soll-Kontur derart skaliert wird, dass ein Abstand zur Ist-Kontur minimal wird;
b) die Ist-Kontur mit dieser skalierten Soll-Kontur (2) verglichen wird, um zu ermitteln, ob die Ist-Kontur innerhalb eines vorgegebenen Toleranzbandes um die skalierte Soll-Kontur liegt.

2. Verfahren nach Anspruch 1, **dadurch gekennzeichnet, dass** die Soll-Kontur durch Variation wenigstens eines Parameters (b; b') skaliert wird.

3. Verfahren nach einem der vorhergehenden Ansprüche, **dadurch gekennzeichnet, dass** die Soll-Kontur auf Basis einer Extremalbedingung bezüglich der Ist-Kontur skaliert wird.

4. Verfahren nach einem der vorhergehenden Ansprüche, **dadurch gekennzeichnet, dass** die Soll-Kontur durch eine Gestalt vorgegebenen wird.

5. Verfahren nach Anspruch 4, **dadurch gekennzeichnet, dass** die Gestalt asymmetrisch ist.

6. Verfahren nach einem der vorhergehenden Ansprüche, **dadurch gekennzeichnet, dass** ein, insbesondere maximaler, Abstand (t; t') der Ist-Kontur von der skalierten Soll-Kontur ermittelt wird.

7. Verfahren nach einem der vorhergehenden Ansprüche, **dadurch gekennzeichnet, dass** eine extremale Skalierung der Soll-Kontur vorgegeben wird.

8. Verfahren nach einem der vorhergehenden Ansprüche, **dadurch gekennzeichnet, dass** zusätzlich wenigstens ein lokales Extremum der Ist-Kontur ermittelt wird.

9. Verfahren nach Anspruch 8, **dadurch gekennzeichnet, dass** eine minimale Krümmung (rₗₒₖ) der Ist-Kontur ermittelt und mit einer zulässigen Krümmung verglichen wird.

10. Verfahren nach einem der vorhergehenden Ansprüche, **dadurch gekennzeichnet, dass** die Ist-Kontur mit der skalierten Soll-Kontur über eine vorgegebene Bewertungslänge (f) verglichen wird.

11. Verfahren nach einem der vorhergehenden Ansprüche, **dadurch gekennzeichnet, dass** wenigstens ein Verfahrensschritt wenigstens teilweise automatisiert durchgeführt wird.

12. Schaufelkonturprüfmittel zur Prüfung einer Schaufelkontur einer Turbomaschine, mit einem Erfassungsmittel zum Erfassen einer Ist-Kontur (1; 1') einer Schaufel, einem Vorgabemittel zum Vorgeben einer Soll-Kontur der Schaufel, **gekennzeichnet durch**
a) ein Skalierungsmittel zum Skalieren dieser Soll-Kontur, wobei unter einer Skalierung eine gestaltinvariante oder geometrisch ähnliche Veränderung der Soll-Kontur **durch** Vergrößerung oder Verkleinerung der Kontur als Ganzes verstanden wird, und wobei die Soll-Kontur derart skaliert wird, dass ein Abstand zur Ist-Kontur minimal wird;
b) ein Vergleichsmittel zum Vergleichen der Ist-Kontur mit der skalierten Soll-Kontur (2), um zu ermitteln, ob die Ist-Kontur innerhalb eines vorgegebenen Toleranzbandes um die skalierte Soll-Kontur liegt;
wobei das Schaufelkonturprüfmittel zur Durchführung eines Verfahrens nach einem der vorhergehenden Ansprüche eingerichtet ist.

13. Computerprogrammprodukt mit einem Computerprogramm zur Durchführung eines Verfahrens nach einem der vorhergehenden Ansprüche 1 bis 11.

## Claims

1. A method for checking a blade contour of a turbomachine, in particular a gas turbine, wherein an actual contour (1; 1') of a blade is detected,
**characterised in that**
a) a desired contour of the blade is scaled, wherein what is understood by scaling is a shape-invariant or geometrically similar change of the desired contour by enlarging or diminishing the contour as a whole, and the desired contour is scaled in such a way that a distance to the actual contour becomes minimal;
b) the actual contour is compared with this scaled desired contour (2) in order to ascertain whether the actual contour lies within a preset tolerance band around the scaled desired contour.

2. A method according to claim 1, **characterised in that** the desired contour is scaled by variation of at least one parameter (b; b').

3. A method according to one of the preceding claims, **characterised in that** the desired contour is scaled on the basis of an extremal condition with respect to the actual contour.

4. A method according to one of the preceding claims, **characterised in that** the desired contour is preset by a shape.

5. A method according to claim 4, **characterised in that** the shape is asymmetrical.

6. A method according to one of the preceding claims, **characterised in that** a distance (t; t'), in particular a maximum distance, of the actual contour from the scaled desired contour is ascertained.

7. A method according to one of the preceding claims, **characterised in that** an extremal scaling of the desired contour is preset.

8. A method according to one of the preceding claims, **characterised in that** in addition at least one local extremum of the actual contour is ascertained.

9. A method according to claim 8, **characterised in that** a minimum curvature (rₗₒₖ) of the actual contour is ascertained and compared with a permissible curvature.

10. A method according to one of the preceding claims, **characterised in that** the actual contour is compared with the scaled desired contour over a preset evaluation length (f).

11. A method according to one of the preceding claims, **characterised in that** at least one method step is carried out at least in part in an automated manner.

12. A blade-contour checking means for checking a blade contour of a turbomachine, having a detection means for detecting an actual contour (1; 1') of a blade, a presetting means for presetting a desired contour of the blade, **characterised by**
a) a scaling means for scaling this desired contour, wherein what is understood by scaling is a shape-invariant or geometrically similar change of the desired contour by enlarging or diminishing the contour as a whole, and wherein the desired contour is scaled in such a way that a distance to the actual contour becomes minimal;
b) a comparing means for comparing the actual contour with the scaled desired contour (2) in order to ascertain whether the actual contour lies within a preset tolerance band around the scaled desired contour;
wherein the blade-contour checking means is set up to carry out a method in accordance with one of the preceding claims.

13. A computer-program product having a computer program for carrying out a method in accordance with one of the preceding claims 1 to 11.

## Revendications

1. Procédé servant à vérifier un contour d'aube d'une turbomachine, en particulier d'une turbine à gaz, un contour réel (1 ; 1') d'une aube étant détecté,
**caractérisé en ce que**
a) un contour de consigne de l'aube est mis à l'échelle, une mise à l'échelle étant globalement comprise comme une modification du contour de consigne avec variation de forme ou avec forme géométrique identique par l'agrandissement ou la diminution du contour, et le contour de consigne étant mis à l'échelle de telle manière qu'un écart par rapport au contour réel devient minimal ;
b) le contour réel est comparé audit contour de consigne (2) mis à l'échelle afin de déterminer si le contour réel se situe dans une bande de tolérance spécifiée autour du contour de consigne mis à l'échelle.

2. Procédé selon la revendication 1, **caractérisé en ce que** le contour de consigne est mis à l'échelle par la variation d'au moins un paramètre (b ; b').

3. Procédé selon l'une quelconque des revendications précédentes, **caractérisé en ce que** le contour de consigne est mis à l'échelle sur la base d'une condition extrême par rapport au contour réel.

4. Procédé selon l'une quelconque des revendications précédentes, **caractérisé en ce que** le contour de consigne est spécifié par une forme.

5. Procédé selon la revendication 4, **caractérisé en ce que** la forme est asymétrique.

6. Procédé selon l'une quelconque des revendications précédentes, **caractérisé en ce qu'**un écart (t ; t'), en particulier maximal, du contour réel est déterminé par le contour de consigne mis à l'échelle.

7. Procédé selon l'une quelconque des revendications précédentes, **caractérisé en ce qu'**une mise à l'échelle extrême du contour de consigne est spécifiée.

8. Procédé selon l'une quelconque des revendications précédentes, **caractérisé en ce qu'**en plus au moins un extremum local du contour réel est déterminé.

9. Procédé selon la revendication 8, **caractérisé en ce qu'**une courbure (rₗₒₖ) minimale du contour réel est déterminée et est comparée à une courbure admise.

10. Procédé selon l'une quelconque des revendications précédentes, **caractérisé en ce que** le contour réel est comparé au contour de consigne mis à l'échelle par l'intermédiaire d'une longueur d'évaluation (f) spécifiée.

11. Procédé selon l'une quelconque des revendications précédentes, **caractérisé en ce qu'**au moins une étape de procédé est effectuée au moins en partie de manière automatisée.

12. Moyen de vérification de contour d'aube servant à vérifier un contour d'aube d'une turbomachine, comprenant un moyen de détection servant à détecter un contour réel (1 ; 1') d'une aube, un moyen de spécification servant à spécifier un contour de consigne de l'aube,
**caractérisé par**
a) un moyen de mise à l'échelle servant à mettre à l'échelle ledit contour de consigne, une mise à l'échelle étant globalement comprise comme une modification du contour de consigne avec variation de forme ou avec forme géométrique identique par l'agrandissement ou la diminution du contour, et le contour de consigne étant mis à l'échelle de telle manière qu'un écart par rapport au contour réel devient minimal ;
b) un moyen de comparaison servant à comparer le contour réel au contour de consigne (2) mis à l'échelle afin de déterminer si le contour réel se situe dans une bande de tolérance spécifiée autour du contour de consigne mis à l'échelle,
le moyen de vérification de contour d'aube étant mis au point aux fins de l'exécution d'un procédé selon l'une quelconque des revendications précédentes.

13. Produit de programme informatique comprenant un programme informatique servant à l'exécution d'un procédé selon l'une quelconque des revendications 1 à 11.
